# EUROPÄISCHE PATENTSCHRIFT

(11) **EP 1 577 550 B1**
(45) Veröffentlichungstag und Bekanntmachung des Hinweises auf die Patenterteilung: **16.11.2011**
(21) Anmeldenummer: 05003556.7
(22) Anmeldetag: 18.02.2005
(51) Int. Cl.: F03D 11/00

(54) **Verfahren zum Bereitstellen einer Seilwinde an einer Windenergieanlage und Vorrichtung zur Durchführung des Verfahrens**
Method for provisioning a winch on a wind energy plant and device for carrying out this method
Procédé pour rendre disponible un treuil sur une éolienne et dispositif pour réaliser ce procédé

(30) Priorität: 17.03.2004 DE 102004012974
(43) Veröffentlichungstag der Anmeldung: 21.09.2005
(73) Patentinhaber: W2E Wind to Energy GmbH, 18230 Ostseebad Rerik (DE)
(72) Erfinder: Grever, Reinhard, 49326 Melle-Wellingholzhausen (DE)
(74) Vertreter: Siekmann, Gunnar

(56) Entgegenhaltungen:
- EP-A- 1 239 150
- EP-A- 1 284 365
- EP-A- 1 328 462
- DE-U1- 29 603 278
- GB-A- 2 087 346
- US-A- 4 120 378

## Beschreibung

Die Erfindung betrifft ein Verfahren, mit den Merkmalen des Oberbegriffs des Patentanspruchs 1 mit dem eine Seilwinde an einer Windenergieanlage derart bereitgestellt wird, daß mit der Seilwinde schwere Bauteile des Gondelkopfes der Windenergieanlage auswechselbar sind.

Weiterhin betrifft die Erfindung eine Vorrichtung zum Auswechseln von schweren Bauteilen des Gondelkopfes einer Windenergieanlage mit einer Seilwinde, mit den Merkmalen des Oberbegriffs des Patentanspruchs 6.

Bekannte Windenergieanlagen weisen einen in den Gondelkopf integrierten Bordkran auf, der in der Regel nur zum Befördern kleinerer Lasten ausgelegt ist. Um schwerere Bauteile des Gondelkopfes, beispielsweise Rotornabe, Rotorblätter, Generator oder Getriebe auszutauschen, sind diese Bordkrane nicht ausgelegt.

Die Möglichkeit, Windenergieanlagen serienmäßig mit stärkeren Bordkranen auszurüsten, ist langfristig betrachtet unrentabel, so daß sich zum Austausch schwererer Bauteile mobile Vorrichtungen bewährt haben. Mobile Vorrichtungen sind beispielsweise Autokrane oder Mobilkrane mit einem Fahrwerk, mit denen die Seilwinde für eine begrenzte Einsatzdauer an ihren Einsatzort herangefahren werden kann. Der Einsatz von Kranwagen und anderen mobilen Kranwinden ist jedoch insbesondere bei großen Nabenhöhen mit hohen Kosten verbunden, die sich letztendlich auch im Strompreis niederschlagen.

Die EP 1 328 462 A (WO 02/34664 A1) beschreibt eine Windenergieanlage mit einem Servicekran, der mit dem freien Ende seines Windenseiles am Gondelkopf angeschlagen wird und mittels seines eigenen Seils zum Gondelkopf hinaufgezogen wird. Der Servicekran wird dann auf dem Gondelkopf befestigt und das freie Ende des Windenseils vom Gondelkopf gelöst. Daneben weist diese Windenergieanlage auch einen Montagekran auf, der fest auf der Windenergieanlage montiert ist, jedoch nicht notwendigerweise so dimensioniert ist, dass er in der Lage ist, schwere Teile auf die Windenergieanlage zu heben.

Ein Kran für eine Windkraftanlage ist in der EP 1 284 365 A2 beschrieben. Auf dem Turm ist ein Kran angeordnet, mit dem die erforderlichen Werkzeuge und Gegenstände zur Wartung und Reparatur auf den Maschinenrahmen gehoben werden können. Dabei ist eine Ausgestaltung vorgesehen, bei der ein Auslegerkran und ein Brückenkran vorgesehen sind und sich der Brückenkran mit dem Auslegerkran dadurch kombinieren lässt, dass die Schenkel des Auslegerkrans gleichzeitig die Laufbahn für den Brückenkran bilden. Mit dem Brückenkran können die Winden mit Hubseil und Kranhaken für den Auslegerkran hochgezogen werden.

Eine transportable Arbeitsvorrichtung mit Hebegerät an einer Windkraftanlage ist aus der EP 1 239 150 A bekannt. Die Hebeeinrichtung wird hier mit einer Aufzugeinrichtung auf die Windkraftanlage transportiert, wobei die Hebeeinrichtung eine zwischen dem Boden und dem Mast verlegte Seilanordnung aufweist. Die Seilanordnung ist dabei von der Windkraftanlage weggespannt, so dass ein Schlagen gegen den Turm der Windkraftanlage vermieden wird.

Die US 4,120,378 offenbart eine Arbeitsplattform zur Benutzung innerhalb eines Silos oder einer ähnlichen zylindrischen Struktur. Die Arbeitsplattform wird dabei zur Stabilisierung mit an der Innenwand des zylindrischen Turms ablaufenden Rädern abgestützt.

Der Erfindung liegt daher die Aufgabe zugrunde, ein Verfahren und eine Vorrichtung der eingangs beschriebenen Gattung aufzuzeigen, mit denen die beim Auswechseln schwerer Bauteile des Gondelkopfes entstehenden Kosten maßgeblich reduziert sind.

Diese Aufgabe ist erfindungsgemäß durch ein Verfahren mit den Merkmalen des Patentanspruches 1 und durch eine Vorrichtung mit den Merkmalen des Patentanspruches 6 gelöst. Vorteilhafte Weiterbildungen der Erfindung sind in den jeweils auf diese Patentansprüche rückbezogenen Unteransprüchen beschrieben.

Das erfindungsgemäße Verfahren zeichnet sich dadurch aus, daß die Seilwinde mit dem freien Ende ihres Windenseiles am Gondelkopf angeschlagen wird. Dann wird die Seilwinde mittels ihres eigenen Seiltriebes zum Gondelkopf hinaufgezogen und die Seilwinde wird mit ihrem Stator am Gondelkopf befestigt. Schließlich wird das freie Ende des Windenseiles wieder vom Gondelkopf gelöst, um es dann an auszuwechselnden schweren Bauteilen des Gondelkopfes anschlagen zu können. Ist der Einsatz der Seilwinde beendet, kann das erfindungsgemäße Verfahren mit umgekehrter Verfahrensschrittfolge durchgeführt werden, so daß die Seilwinde nachfolgend an einer nächsten Windenergieanlage eingesetzt werden kann. Auf den teuren Einsatz von Autokränen und Mobilkränen mit einem Fahrwerk kann verzichtet werden.

Nach einer Weiterbildung der Erfindung wird das Windenseil wenigstens beim Hinaufziehen der Seilwinde zum Gondelkopf über eine am Stator der Seilwinde angeordnete Seilführung geführt. Mit der Seilführung werden die insbesondere beim Ein- und Ausschalten des Seiltriebes auf den Stator übertragenen Trägheitsmomente und die durch das Auf- und Abspulen des Windenseiles auf die bzw. von der Seiltrommel hervorgerufene Schwerpunktverlagerung des Stators aufgefangen, so daß Pendelbewegungen bzw. eine Schrägstellung der Seilwinde aus ihrer vorbestimmten senkrechten Schwereachse heraus vernachlässigbar klein werden.

Erfindungsgemäß wird die Seilwinde von ihrem Windenseil an ein am Gondelkopf angeschlagenes Tragseil übergeben. Dazu wird das obere Ende des Tragseiles am Gondelkopf angeschlagen und das untere Ende des Tragseiles an den Stator der Seilwinde angeschlagen. Dann wird die Seilwinde mittels ihres eigenen Seiltriebes ein Stück weit abwärts bewegt, bis die Seilwinde vom Tragseil getragen wird. Anschließend wird die Seilführung aus der lotrechten Schwerelinie der Seilführung herausbewegt und das freie Ende des Windenseiies wird vom Gondelkopf gelöst. Der Stator der Seilwinde verbleibt hierbei in seiner vorbestimmten Ruhelage.

Nach einer weiteren Weiterbildung der Erfindung wird die Seilwinde nachfolgend vom Tragseil an einen Seilzug übergeben. Dazu wird das Zugseil des Seilzuges mit seinem freien Seilende an den Stator der Seilwinde angeschlagen. Dann wird die Seilwinde mit dem Zugseil des Seilzuges ein Stück weit nach oben gezogen und das völlig entlastete Tragseil nachfolgend vom Stator der Seilwinde gelöst. Alternativ kann statt des Seilzuges in entsprechender Weise auch ein Kettenzug eingesetzt werden.

Zur Positionierung der Seilwinde an einem vorbestimmten Ort des Gondelkopfes ist vorgesehen, daß der Seilzug mittels eines Kranauslegers am Gondelkopf verschwenkt wird. Dazu wird die Seilwinde mit dem Seilzug und mit dem Kranausleger bewegt. Der Kranausleger führt dabei eine Schwenkbewegung aus, mit der die Seilwinde auf dem Gondelkopf bzw. auf einem Bauteil des Gondelkopfes abgestellt wird.

Die erfindungsgemäße Vorrichtung wird **dadurch gekennzeichnet, daß** der Stator wenigstens eine zur Seiltrommel beabstandet angeordnete Seilführung aufweist, und daß der Gondelkopf eine mit dem Stator der Seilwinde korrespondierende Seilwindenaufnahme aufweist. Damit ist eine mobile Vorrichtung geschaffen, die mit Vorteil für eine Vielzahl von Windenergieanlagen bereitsteht. Der erforderliche Abstand zwischen der Drehachse der Seiltrommel und der am Stator angeordneten Seilführung ist jedoch maßgeblich vom Trägheitsmoment der Seilwinde, von der Breite ihrer Seiltrommel sowie von der Größe der auf die Seiltrommel einwirkenden Anfahr- und Bremsmomente abhängig. Der erforderliche Abstand weist jedoch vorzugsweise etwa das Maß des drei- bis vierfachen Durchmessers der Seiltrommel auf. Die Seilwindenaufnahme bildet am Gondelkopf der Windenergieanlage einen Ort aus, an dem die Seilwinde sicher in Betrieb genommen werden kann.

Nach einer Weiterbildung der Erfindung weist die Seilführung wenigstens eine Seilumlenkrolle auf. Je nach Größe der erfindungsgemäßen Vorrichtung und aus sicherheitstechnischen Gründen kann die Seilführung auch mehrere Seilumlenkrollen aufweisen. Außerdem weist die Seilführung wenigstens ein mit dem Stator verbindbares Traggerüst auf, mit dem die Seilumlenkrolle oberhalb der Seiltrommel und an der lotrechten Schwerelinie der Seilwinde positionierbar ist. Damit kann die gesamte erfindungsgemäße Vorrichtung auf den Gondelkopf der Windenergieanlage hinaufgezogen werden, ohne daß sich dabei ihre räumliche Ausrichtung ändert.

Nach einer nächsten Weiterbildung der Erfindung besteht das Traggerüst aus wenigstens zwei gelenkig miteinander verbundenen Gerüstsegmenten, wobei ein unteres Gerüstsegment mit dem Stator verbindbar ist und am oberen Gerüstsegment die Umlenkrolle gelagert ist. Vorzugsweise sind das obere und das untere Gerüstsegment über eine Schamierverbindung miteinander verbunden, der wenigstens ein Riegelorgan zugeordnet ist, mit dem die Seilführung an der lotrechten Schwerelinie der Seilwinde gesichert werden kann. Das Traggerüst weist mit Vorteil eine etwa pyramidenförmig ausgebildete Gestalt auf, an dessen Spitze die Seilumlenkrolle angeordnet ist. Die das obere mit dem unteren Gerüstsegment verbindende Schamierverbindung erlaubt mit Vorteil eine Verdrehung von 180°, so daß das obere Gerüstsegment besonders platzsparend seitlich an das untere Gerüstsegment herangeklappt werden kann.

Weiterhin ist der Seilwindenaufnahme ein Kranausleger sowie ein mit dem Kranausleger verschwenkbarer Seilzug zugeordnet. Der am freien Ende des Kranauslegers angeschlagene Seilzug ist mit Vorteil manuell betätigbar. Es ist jedoch ebenso denkbar, dem Seilzug einen elektrischen Steuerantrieb zuzuordnen. Bei ausreichend lang ausgebildetem Kranausleger kann hingegen auf einen Seilzug verzichtet werden. Die Seilwinde kann dann an ihrem Windenseil hängend mit dem Kranausleger direkt in die Seilwindenaufnahme bewegt werden.

Um die erfindungsgemäße Vorrichtung von ihrem Windenseil an das Tragseil des Seilzuges übergeben zu können, weist die Seilwindenaufnahme erfindungsgemäß einen über den Gondelkopf hinausstehenden Kragträger auf, dem wenigstens zwei am Stator der Seilwinde angeordnete Anschlagösen zugeordnet sind. Die Anschlagösen befinden sich auf einer von der senkrechten Schwerelinie aufgespannten Ebene oberhalb des Schwerpunktes der erfindungsgemäßen Vorrichtung, so daß die räumliche Ausrichtung der Vorrichtung immer beibehalten wird.

Nach einer besonders vorteilhaften Weiterbildung der Erfindung ist der Kranausleger, vorzugsweise ebenfalls über einen Seil- oder einen Kettenzug, verschwenkbar an der Seilwindenaufnahme angelenkt. Das hat den Vorteil, daß die Seilwindenaufnahme beweglich am Gondelkopf geführt werden kann, ohne daß ein Nachführen des Kranauslegers erforderlich ist. Dazu ist vorgesehen, daß zwischen der Seilwindenaufnahme und dem Gondelkopf eine horizontale Längsführung ausgebildet ist. Weiterhin ist zwischen der Seilwinde und der Seilwindenaufnahme eine horizontale Querführung ausgebildet. Dazu weist die Seilwinde beispielsweise ein Fahrwerk auf, das mit Vorteil auch zum freien Umherfahren der Seilwinde am Boden der Windenergieanlage geeignet ist. Die Längsführung und die Querführung bilden somit ein Kreuzportal aus, mit dem die Seilwinde am Gondelkopf der Windenergieanlage in eine beliebige Position bewegt werden kann. Die Seilwinde kann somit über sämtlichen Bauteilen des Gondelkopfes exakt positioniert werden, so daß auszuwechselnde Bauteile am oder im Gondelkopf problemlos und sicher erfaßt bzw. abgesetzt werden können.

Nach einer anderen Weiterbildung der Erfindung weist die Seilführung wenigstens eine Laufrolle zum Führen der Seilwinde an einem Führungsseil auf. Eine derartige Ausbildung ist insbesondere dann von Vorteil, wenn der Turm der Windenergieanlage als nach unten hin weit ausladende Gitterkonstruktion ausgebildet ist. In diesem Fall kann das Führungsseil zwischen dem Gondelkopf und dem Erdboden in angemessener Schräglage verspannt werden, so daß sich die am Führungsseil geführte Seilwinde zum Gondelkopf hinaufziehen bzw. vom Gondelkopf hinunterlassen kann, ohne daß sie mit dem Turm kollidiert.

Ein Ausführungsbeispiel der Erfindung, aus dem sich weitere erfinderische Merkmale ergeben, ist in der Zeichnung dargestellt. Es zeigen:
- Figur 1: eine erfindungsgemäße Vorrichtung während der Durch- führung eines dritten Verfahrensschrittes;
- Figur 2: die in Fig. 1 dargestellte Vorrichtung nach Durchführung eines sechsten Verfahrensschrittes;
- Figur 3: die in den Fig. 1 und 2 dargestellte Vorrichtung nach Durchführung eines achten Verfahrensschrittes;
- Figur 4: die in den Fig. 1 bis 3 dargestellte Vorrichtung während der Durchführung eines neunten Verfahrensschrittes; und
- Figur 5: die in den Fig. 1 bis 4 dargestellte Vorrichtung nach Durchführung eines neunten Verfahrensschrittes.

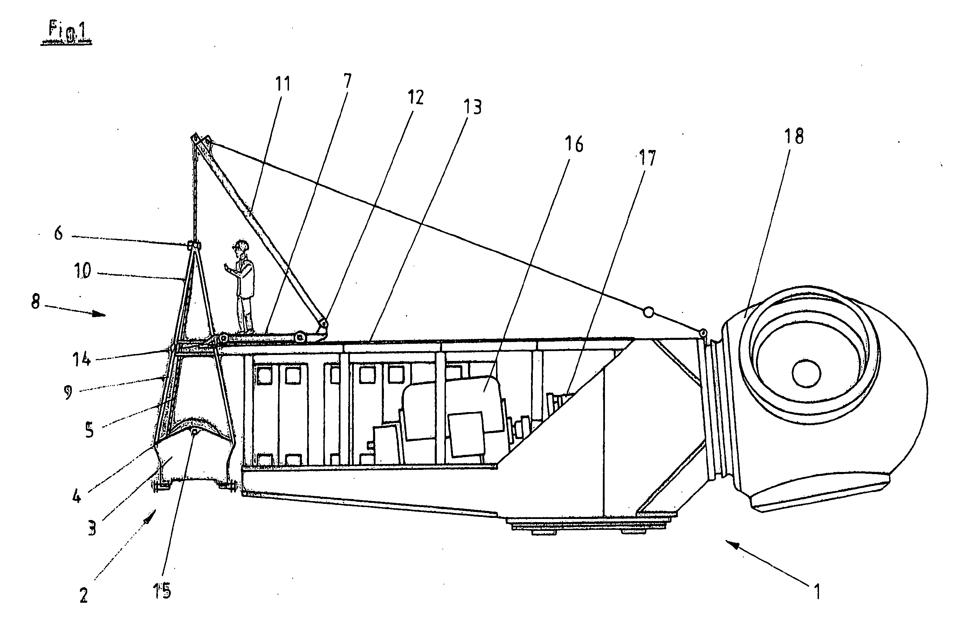

In Fig. 1 ist eine erfindungsgemäße Vorrichtung zum Auswechseln von schweren Bauteilen des Gondelkopfes 1 einer Windenergieanlage mit einer Seilwinde 2 dargestellt, an deren Stator 3 wenigstens eine Seiltrommel 4 zur Aufnahme eines Windenseiles 5 gelagert ist. Der Stator 3 weist eine zur Seiltrommel 4 beabstandet angeordnete Seilführung 6 auf und der Gondelkopf 1 weist eine mit dem Stator 3 der Seilwinde 2 korrespondierende Seilwindenaufnahme 7 auf. Die Seilführung 6 wird von einem mit dem Stator 3 verbindbaren Traggerüst 8 getragen, mit dem die Seilführung 6 oberhalb der Seiltrommel 4 und auf der lotrechten Schwerelinie der Seilwinde 2 positionierbar ist. Das Traggerüst 8 besteht aus zwei gelenkig miteinander verbundenen Gerüstsegmenten 9, 10, wobei ein unteres Gerüstsegment 9 mit dem Stator 3 verbindbar ist und am oberen Gerüstsegment 10 die Seilführung 6 angeordnet ist. Der Seilwindenaufnahme 7 ist ein Kranausleger 11 zugeordnet, der mit der Seilwindenaufnahme 7 über eine Gelenkverbindung 12 verbunden ist. Zwischen der Seilwindenaufnahme 7 und dem Gondelkopf 1 ist eine horizontale Längsführung ausgebildet und die Seilwinde 2 und die Seilwindenaufnahme 7 weisen jeweils miteinander korrespondierende Führungsflächen zur Herstellung einer horizontalen Querführung (nicht dargestellt) auf. Die Seilwindenaufnahme 7 weist einen über den Gondelkopf 1 hinausstehenden Kragträger 14 zum Anschlagen eines Tragseiles auf, dem zwei am Stator 3 der Seilwinde 2 angeordnete Anschlagösen 15 zugeordnet sind.

Im folgenden wird das erfindungsgemäße Verfahren beschrieben, mit dem die Seilwinde 2 an der Windenergieanlage derart bereitgestellt wird, daß mit der Seilwinde 2 schwere Bauteile 16, 17, 18 des Gondelkopfes 1 der Windenergieanlage auswechselbar sind. Dazu wird das Windenseil 5 in einem ersten Verfahrensschritt über die am Stator 3 der Seilwinde 2 angeordnete Seilführung 6 geführt und mit seinem freien Ende in einem zweiten Verfahrensschritt über den Kranausleger 11 am Gondelkopf 1 angeschlagen. In dem nachfolgenden, hier dargestellten dritten Verfahrensschritt wird die Seilwinde 2 mittels ihres eigenen Seiltriebes zum Gondelkopf 1 hinaufgezogen.

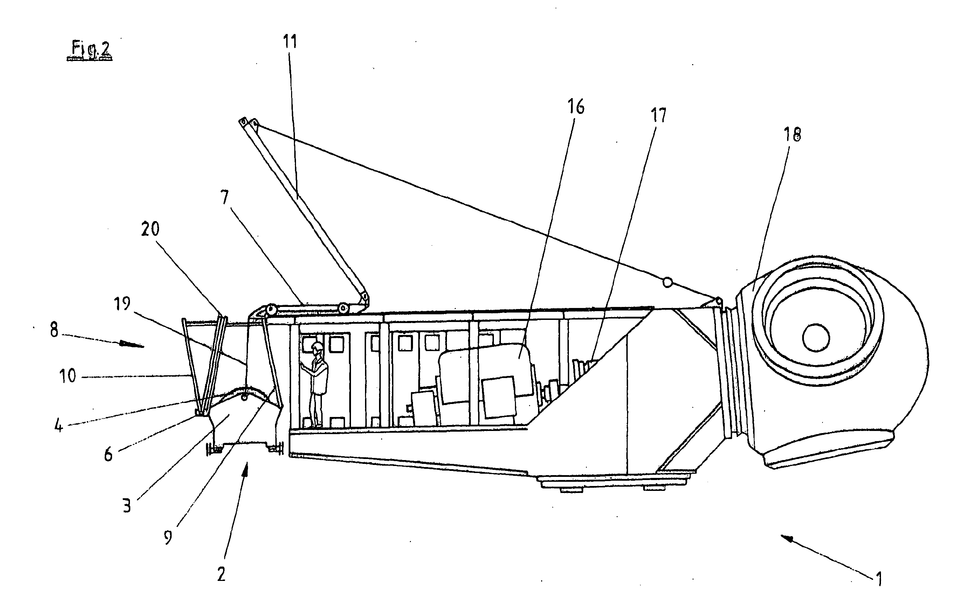

Aus der Fig. 2 ist erkennbar, daß die Seilwinde 2 in einem vierten Verfahrensschritt an ein am Gondelkopf 1 angeschlagenes Tragseil 19 übergeben wurde und das freie Ende des Windenseiles 5 (siehe Fig. 1) in einem fünften Verfahrensschritt vom Kranausleger 11 des Gondelkopfes 1 gelöst wurde. Anschließend wurde die Seilführung 6 in einem sechsten Verfahrensschritt mit dem oberen Gerüstsegment 10 aus der lotrechten Schwerelinie der Seilwinde 2 herausbewegt. Dazu sind das untere Gerüstsegment 9 und das obere Gerüstsegment 10 über eine Schamierverbindung 20 miteinander verbunden, mit der das obere Gerüstsegment 10 um 180° abgeklappt wurde. Gleiche Bauteile sind mit gleichen Bezugszahlen versehen.

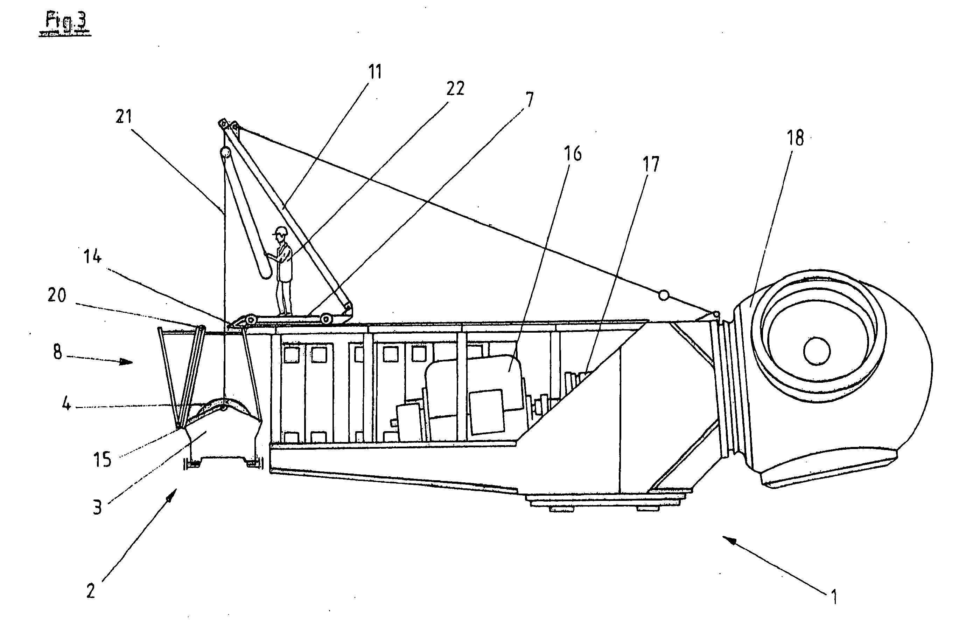

Aus der Fig. 3 ist erkennbar, daß die Seilwinde 2 in einem siebten Verfahrensschritt vom Tragseil 19 (siehe Fig. 2) an einen Seilzug 21 übergeben wurde, der am freien Ende des an der Seilwindenaufnahme 7 angelenkten Kranauslegers 11 angeordnet ist. Die Fig. 3 zeigt die erfindungsgemäße Vorrichtung nach Durchführung des achten Verfahrensschrittes, in dem das Tragseil 19 (siehe Fig. 2) vom Kragträger 14 der Seilwindenaufnahme 7 und vom Stator 3 der Seilwinde 2 gelöst wurde. Der Seilzug 21 ist als ein von einer Person 22 manuell zu bedienender Flaschenzug ausgebildet. Gleiche Bauteile sind mit gleichen Bezugszahlen versehen.

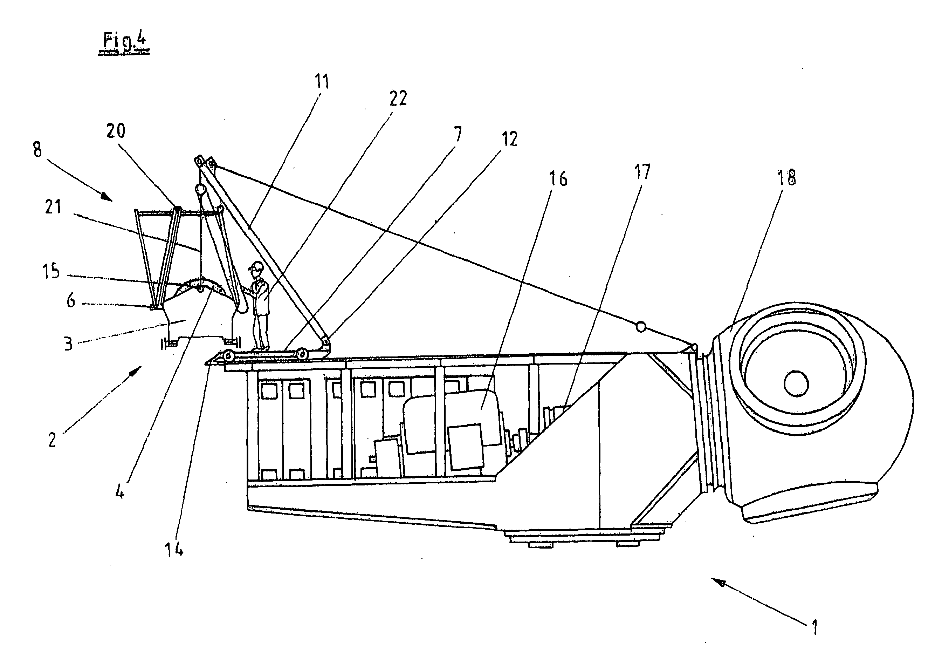

Die Fig. 4 zeigt die Vorrichtung in einem neunten Verfahrensschritt, in welchem die Seilwinde 2 zur Befestigung in der Seilwindenaufnahme 7 des Gondelkopfes 1 mit dem Seilzug 21 und mit dem Kranausleger 11 in die Seilwindenaufnahme 7 hineinbewegt wird. Gleiche Bauteile sind hier ebenfalls mit gleichen Bezugszahlen versehen.

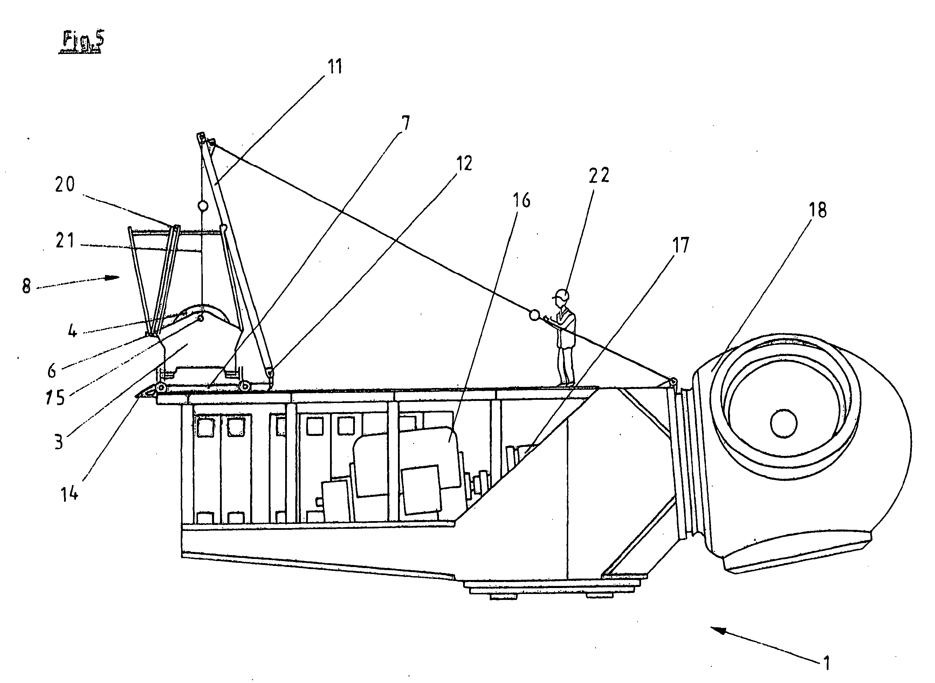

Die Fig. 5 zeigt die Seilwinde 2 nach Beendigung des neunten Verfahrensschrittes, mit welchem die Seilwinde 2 in die Seilwindenaufnahme 7 hineinbewegt wurde. Mit Beendigung dieses Verfahrensschrittes steht die Seilwinde 2 zum Auswechseln eines oder mehrerer schwerer Bauteile 16, 17, 18 des Gondelkopfes 1 bereit.

## Patentansprüche

1. Verfahren, mit dem eine Seilwinde an einer Windenergieanlage derart bereitgestellt wird, dass mit der Seilwinde schwere Bauteile des Gondelkopfes der Windenergieanlage auswechselbar sind, bei dem die Seilwinde (2) mit dem freien Ende ihres Windenseiles (5) am Gondelkopf (1) angeschlagen wird, die Seilwinde (2) mittels ihres eigenen Seiltriebes zum Gondelkopf (1) hinaufgezogen wird, die Seilwinde (2) mit ihrem Stator (3) am Gondelkopf (1) befestigt wird, und das freie Ende des Windenseiles (5) vom Gondelkopf (1) gelöst wird,
**dadurch gekennzeichnet,**
**dass** die Seilwinde (2) von ihrem Windenseil (5) an wenigstens ein am Gondelkopf (1) angeschlagenes Tragseil (19) übergeben wird.

2. Verfahren nach Anspruch 1, **dadurch gekennzeichnet, dass** das Windenseil (5) wenigstens beim Hinaufziehen der Seilwinde (2) zum Gondelkopf (1) über eine am Stator (3) der Seilwinde (2) angeordnete Seilführung (6) geführt wird.

3. Verfahren nach einem der vorhergehenden Ansprüche, **dadurch gekennzeichnet, dass** die Seilführung (6) aus der lotrechten Schwerelinie der Seilwinde (2) herausbewegt wird.

4. Verfahren nach einem der vorhergehenden Ansprüche, **dadurch gekennzeichnet, dass** die Seilwinde (2) vom Tragseil (19) an einen Seilzug (21) übergeben wird, und dass der Seilzug (21) mittels eines Kranauslegers (11) am Gondelkopf (1) verschwenkt wird.

5. Verfahren nach Anspruch 4, **dadurch gekennzeichnet, dass** die Seilwinde (2) zur Befestigung am Gondelkopf (1) mit dem Seilzug (21) und mit dem Kranausleger (11) in einer Seilwindenaufnahme positioniert wird.

6. Vorrichtung zum Auswechseln von schweren Bauteilen des Gondelkopfes einer Windenergieanlage, wobei die Vorrichtung eine Seilwinde miteinem Stator beinhaltet, wobei am Stator wenigstens eine Seiltrommel zur Aufnahme eines Windenseiles gelagert ist, wobei der Stator (3) wenigstens eine zur Seiltrommel (4) beabstandet angeordnete Seilführung (6) aufweist und der Gondelkopf (1) eine mit dem Stator (3) der Seilwinde (2) korrespondierende Seilwindenaufnahme (7) aufweist, insbesondere zur Durchführung eines Verfahrens nach einem der Ansprüche 1 bis 5,
**dadurch gekennzeichnet,**
**dass** die Seilwindenaufnahme (7) einen über den Gondelkopf (1) hinausstehenden Kragträger (14) zum Anschlagen eines Tragseiles (19) aufweist, dem wenigstens zwei am Stator (3) der Seilwinde (2) angeordnete Anschlagösen (15) zugeordnet sind.

7. Vorrichtung nach Anspruch 6, **dadurch gekennzeichnet, dass** die Seilführung (6) wenigstens eine Seilumlenkrolle aufweist.

8. Vorrichtung nach Anspruch 7, **dadurch gekennzeichnet, dass** die Seilführung (6) wenigstens ein mit dem Stator (3) verbindbares Traggerüst (8) aufweist, mit dem die Seilumlenkrolle oberhalb der Seiltrommel (4) und auf der lotrechten Schwerelinie der Seilwinde (2) positionierbar ist.

9. Vorrichtung nach Anspruch 8, **dadurch gekennzeichnet, dass** das Traggerüst (8) aus wenigstens zwei gelenkig miteinander verbundenen Gerüstsegmenten (9, 10) besteht, wobei ein unteres Gerüstsegment (9) mit dem Stator (3) verbindbar ist und am oberen Gerüstsegment (10) die Umlenkrolle gelagert ist.

10. Vorrichtung nach einem der Ansprüche 6 bis 9, **dadurch gekennzeichnet, dass** der Seilwindenaufnahme (7) ein Kranausleger (11) sowie ein mit dem Kranausleger (11) verschwenkbarer Seilzug (21) zugeordnet ist.

11. Vorrichtung nach einem der Ansprüche 6 bis 10, **dadurch gekennzeichnet, dass** der Kranausleger (11) an der Seilwindenaufnahme (7) angelenkt ist.

12. Vorrichtung nach einem der Ansprüche 6 bis 11, **dadurch gekennzeichnet, dass** dem Seilzug (21) wenigstens zwei am Stator (3) der Seilwinde (2) angeordnete Anschlagösen (15) zugeordnet sind.

13. Vorrichtung nach einem der Ansprüche 6 bis 12, **dadurch gekennzeichnet, dass** zwischen der Seilwindenaufnahme (7) und dem Gondelkopf (1) eine horizontale Längsführung (13) ausgebildet ist.

14. Vorrichtung nach einem der Ansprüche 6 bis 13, **dadurch gekennzeichnet, dass** zwischen der Seilwinde (2) und der Seilwindenaufnahme (7) eine horizontale Querführung ausgebildet ist.

15. Vorrichtung nach einem der Ansprüche 6 bis 14, **dadurch gekennzeichnet, dass** die Seilführung (6) wenigstens eine Laufrolle zum Führen der Seilwinde (2) an einem Führungsseil aufweist.

## Claims

1. A method with which a cable winch on a wind powerplant is provisioned such that heavy components of the nacelle head of the wind powerplant can be replaced with the cable winch, in which the cable winch (2) is secured to the nacelle head (1) with the free end of its winch cable (5), the cable winch (2) is drawn up to the nacelle head (1) by means of its own cable drive, the cable winch (2) with its stator (3) is attached to the nacelle head (1), and the free end of the winch cable (5) is released from the nacelle head (1),
**characterised in that** the cable winch (2) is transferred from its winch cable (5) to at least one supporting cable (19) secured to the nacelle head (1).

2. The method in accordance with Claim 1,
**characterised in that** the winch cable (5), at least while the cable winch (2) is being drawn up to the nacelle head (1), is guided by means of a cable guide (6) arranged on the stator (3) of the cable winch (2).

3. The method in accordance with one of the preceding claims,
**characterised in that** the cable guide (6) is moved out of the vertical line through the centre of gravity of the cable winch (2).

4. The method in accordance with one of the preceding claims,
**characterised in that** the cable winch (2) is transferred from the supporting cable (19) to a cable hoist (21), and **in that** the cable hoist (21) is pivoted by means of a crane arm (11) on the nacelle head (1).

5. The method in accordance with Claim 4,
**characterised in that** for purposes of attachment to the nacelle head (1) the cable winch (2) is positioned in a cable winch seating with the cable hoist (21) and the crane arm (11).

6. A device for the replacement of heavy components of the nacelle head of a wind powerplant, wherein
the device contains a cable winch with a stator, wherein
at least one cable drum for purposes of accommodating a winch cable is mounted on the stator, wherein
the stator (3) has at least one cable guide (6) arranged at a distance from the cable drum (4), and the nacelle head (1) has a cable winch seating (7) corresponding with the stator (3) of the cable winch (2), in particular for purposes of executing a method in accordance with one of the claims 1 to 5,
**characterised in that**, the cable winch seating (7) has a cantilever beam (14) projecting beyond the nacelle head (1) for purposes of securing a supporting cable (19), to which at least two securing eyes (15) arranged on the stator (3) of the cable winch (2) are assigned.

7. The device in accordance with Claim 6,
**characterised in that** the cable guide (6) has at least one cable pulley.

8. The device in accordance with Claim 7,
**characterised in that** the cable guide (6) has at least one load-bearing structure (8) that can be connected with the stator (3), with which the cable pulley can be positioned above the cable drum (4) and on the vertical line through the centre of gravity of the cable winch (2).

9. The device in accordance with Claim 8,
**characterised in that** the load-bearing structure (8) consists of at least two structural segments (9, 10) connected with one another in a hinged manner, wherein a lower structural segment (9) can be connected with the stator (3), and the pulley is mounted on the upper structural segment (10).

10. The device in accordance with one of the Claims 6 to 9,
**characterised in that** a crane arm (11) and a cable hoist (21) that can be pivoted with the crane arm (11) are assigned to the cable winch seating (7).

11. The device in accordance with one of the Claims 6 to 10,
**characterised in that** the crane arm (11) is hinged to the cable winch seating (7).

12. The device in accordance with one of the Claims 6 to 11,
**characterised in that** at least two securing eyes (15) arranged on the stator (3) of the cable winch (2) are assigned to the cable hoist (21).

13. The device in accordance with one of the Claims 6 to 12,
**characterised in that** a horizontal longitudinal guide (13) is designed between the cable winch seating (7) and the nacelle head (1).

14. The device in accordance with one of the Claims 6 to 13,
**characterised in that** a horizontal transverse guide is designed between the cable winch (2) and the cable winch seating (7).

15. The device in accordance with one of the Claims 6 to 14,
**characterised in that** the cable guide (6) has at least one roller for purposes of guiding the cable winch (2) on a guiding cable.

## Revendications

1. Procédé avec lequel un treuil à câble est mis à disposition sur une éolienne de telle sorte que des composants lourds de la tête de gondole de l'éolienne peuvent être remplacés avec le treuil à câble, dans lequel le treuil à câble (2) est accroché par l'extrémité libre de son câble de treuil (5) sur la tête de gondole (1), le treuil à câble (2) est tiré au moyen de sa propre commande de câble vers le haut jusqu'à la tête de gondole (1), le treuil à câble (2) est fixé par un stator (3) sur la tête de gondole (1), et l'extrémité libre du câble de treuil à câble (5) est détachée de la tête de gondole (1),
**caractérisé en ce que**
le treuil à câble (2) est transmis de son câble (5) à au moins un câble porteur (19) accroché sur la tête de gondole (1).

2. Procédé selon la revendication 1, **caractérisé en ce que** le câble de treuil (5) est guidé au moins lors de la traction vers le haut du treuil à câble (2) vers la tête de gondole (1) au moyen d'un guide-câble (6) disposé sur le stator (3) du treuil à câble (2).

3. Procédé selon l'une des revendications précédentes, **caractérisé en ce que** le guide-câble (6) est déplacé à partir de la ligne de gravité perpendiculaire du treuil à câble (2).

4. Procédé selon l'une des revendications précédentes, **caractérisé en ce que** le treuil à câble (2) est transmis du câble porteur (19) à un câble sous gaine (21), et **en ce que** le câble sous gaine (21) est basculé au moyen d'une flèche de grue (11) sur la tête de gondole (1).

5. Procédé selon la revendication 4, **caractérisé en ce que** le treuil à câble (2) est positionné pour la fixation sur la tête de gondole (1) avec le câble sous gaine (21) et avec la flèche de grue (11) dans un logement de treuil à câble.

6. Dispositif destiné à remplacer des composants lourds de la tête de gondole d'une éolienne, le dispositif comprenant un treuil à câble avec un stator, au moins un tambour de câble étant monté sur le stator pour le logement d'un câble de treuil à câble, le stator (3) présentant au moins un guide-câble (6) disposé à distance du tambour de câble (4) et la tête de gondole (1) présentant un logement de treuil à câble (7) correspondant au stator (3) du treuil à câble (2), en particulier pour la mise en oeuvre d'un procédé selon l'une des revendications 1 à 5,
**caractérisé en ce que**,
le logement de treuil à câble (7) présente une poutre en porte-à-faux (14) dépassant de la tête de gondole (1) pour l'accrochage d'un câble porteur (19), auquel sont attribués au moins deux oeillets d'accrochage (15) disposés sur le stator (3) du treuil à câble (2).

7. Dispositif selon la revendication 6, **caractérisé en ce que** le guide-câble (6) présente au moins une poulie de renvoi de câble.

8. Dispositif selon la revendication 7, **caractérisé en ce que** le guide-câble (6) présente au moins une ossature porteuse (8) pouvant être reliée au stator (3), ossature avec laquelle la poulie de renvoi de câble peut être positionnée au-dessus du tambour de câble (4), et sur la ligne de gravité perpendiculaire du treuil à câble (2).

9. Dispositif selon la revendication 8, **caractérisé en ce que** l'ossature porteuse (8) comprend au moins deux segments d'ossature (9, 10) reliés de façon articulée l'un à l'autre, un segment d'ossature (9) inférieur pouvant être relié au stator (3) et la poulie de renvoi étant montée sur le segment d'ossature (10) supérieur.

10. Dispositif selon l'une des revendications 6 à 9, **caractérisé en ce qu'**une flèche de grue (11) et un câble sous gaine (21) pouvant basculer avec la flèche de grue (11) sont attribués au logement de treuil à câble (7).

11. Dispositif selon l'une des revendications 6 à 10, **caractérisé en ce que** la flèche de grue (11) est articulée sur le logement de treuil à câble (7).

12. Dispositif selon l'une des revendications 6 à 11, **caractérisé en ce qu'**au moins deux oeillets d'accrochage (15) disposés sur le stator (3) du treuil à câble (2) sont attribués au câble sous gaine (21).

13. Dispositif selon l'une des revendications 6 à 12, **caractérisé en ce qu'**un guide longitudinal (13) horizontal est conçu entre le logement de treuil à câble (7) et la tête de gondole (1).

14. Dispositif selon l'une des revendications 6 à 13, **caractérisé en ce qu'**un guide transversal horizontal est conçu entre le treuil à câble (2) et le logement de treuil à câble (7).

15. Dispositif selon l'une des revendications 6 à 14, **caractérisé en ce que** le guide-câble (6) présente au moins un galet de roulement pour le guidage du treuil à câble (2) sur un câble de guidage.
